# FASCICULE DE BREVET EUROPEEN

(11) **EP 1 045 338 B1**
(45) Date de publication et mention de la délivrance du brevet: **19.10.2011**
(21) Numéro de dépôt: 00401021.1
(22) Date de dépôt: 12.04.2000
(51) Int. Cl.: G06K 19/077

(54) **Carte à mémoire électronique sécurisée**
Elektronische Speicherkarte mit Kartensicherheitselement
Electronic memory card with card security element

(30) Priorité: 12.04.1999 FR 9904520
(43) Date de publication de la demande: 18.10.2000
(73) Titulaire: Gemalto SA, 92190 Meudon (FR)
(72) Inventeur: Vere, Denis, 45100 Orleans (FR); CATTE, Etienne, 92210 Saint Cloud (FR)
(74) Mandataire: Cassagne, Philippe M.J.

(56) Documents cités:
- EP-A- 0 326 822
- WO-A-97/18531
- DE-A- 19 621 044
- US-A- 4 857 893
- US-A- 5 244 840

## Description

La présente invention a pour objet une carte à mémoire électronique du type comprenant un corps de carte réalisé dans un matériau plastique et un module électronique comprenant une pastille semi-conductrice et une pluralité de plages de contacts électriques, ces plages de contact étant destinées à établir un contact et une liaison ohmique entre le module électronique de la carte et un dispositif de lecture-écriture qui sera appelé ultérieurement lecteur.

Dans les cartes à mémoire électronique standards, la puce semi-conductrice fait partie d'un module électronique. Ce module électronique constitue un ensemble mécanique formé par des plages externes de contact électrique réalisées sur un circuit imprimé ou constitué par un cadre conducteur, une puce semi-conductrice fixée sur le dos des plages externes du module et des connexions électriques entre les plages externes et les bornes de la puce. En outre, le plus souvent, la puce est enrobée dans un matériau isolant.

Ce module électronique est placé dans un logement ménagé dans le corps de la carte et dont les dimensions sont en général supérieures à celles du module électronique. Le module électronique est fixé, le plus souvent, dans son logement par un matériau adhésif.

Compte tenu du fait que le module électronique constitue un ensemble mécanique accessible de l'extérieur de la carte en raison de la présence des plages de contact externes qui affleurent dans la face externe du corps de carte, il est relativement simple par destruction du corps de la carte de récupérer un module électronique intact.

US-A-5 244 840 décrit une carte à puce comportant deux modules noyés dans la masse.

Dans le cas de cartes à mémoire utilisées comme "badge" d'identification, le module électronique sert à l'identification du porteur dans un lecteur de badge et une photographie du détenteur légitime fixée de façon inviolable sur le corps de la carte sert à l'identification visuelle du porteur par le préposé à la surveillance.

Une fraude possible pour de telles cartes à mémoire servant de badge d'identification consisterait à extraire du corps d'une carte authentique un module électronique comportant des informations d'identification d'une première personne autorisée et à fixer ce module dans un autre corps de carte falsifié comportant la photographie d'une autre personne non autorisée.

L'invention est décrite dans la revendication 1.

Un objet de la présente invention est de fournir une carte à mémoire électronique pouvant servir de badge d'identification de son détenteur qui rende impossible la fraude décrite ci-dessus.

Pour atteindre ce but selon l'invention, la carte à mémoire électronique du type comprenant un corps de carte réalisé en un matériau plastique, ledit corps présentant deux faces principales et un module comprenant une pluralité de plages de contact électrique et une pastille semi-conductrice raccordée auxdites plages par des moyens de connexion ohmique, ladite carte étant destinée à être insérée dans un dispositif de lecture-écriture, caractérisée en ce qu'elle comprend en outre un composant électronique comportant des circuits de mémorisation contenant des informations d'identification de la carte, lesdites informations étant détectables lorsque ladite carte est insérée dans ledit dispositif de lecture/écriture, ledit composant électronique étant entièrement noyé dans le matériau plastique constituant le corps de la carte.

On comprend que grâce aux dispositions de l'invention, selon lesquelles le composant électronique, qui est de préférence une puce semi-conductrice, dans lequel sont mémorisées les informations d'identification est entièrement noyé dans le matériau plastique constituant le corps de la carte, il est impossible d'extraire ce composant sans l'altérer ou au moins sans risquer d'altérer les informations que l'on a mémorisées dans ses circuits électroniques. En outre, la carte comporte un module électronique standard qui ne contient pas les informations d'identification.

D'autres caractéristiques et avantages de l'invention apparaîtront mieux à la lecture de la description qui suit de plusieurs modes de mise en oeuvre de l'invention donnés à titre d'exemples non limitatifs.
les figures 1a et 1b montrent en vue de dessus et en coupe transversale un premier mode de réalisation de la carte dans lequel la carte comporte deux composants électroniques ;
la figure 1c est une vue en perspective d'un mode de réalisation préféré de la puce semi-conductrice du mode de réalisation des figures 1 a et 1b ;
la figure 2 est une vue schématique montrant les interconnexions entre le lecteur et la carte selon le mode de réalisation des figures 7a et 7b ;
les figures 3a et 3b montrent un deuxième mode de réalisation de la carte respectivement en vue de dessus et en coupe transversale ;
les figures 4a et 4b montrent respectivement en vue de dessus et en coupe verticale un troisième mode de réalisation de la carte ;
les figures 5a et 5b montrent respectivement en vue de dessus et en coupe transversale une quatrième mode de réalisation de la carte ;
la figure 6 est une vue schématique des interconnexions entre le lecteur et la carte selon le mode de réalisation des figures 5a et 5b ;
les figures 7a et 7b représentent respectivement en coupe en vue de dessus et en coupe transversale un cinquième mode de réalisation de la carte ; et
la figure 8 montre de façon schématique les interconnexions entre le lecteur et la carte selon le mode de réalisation des figures 7a et 7b.

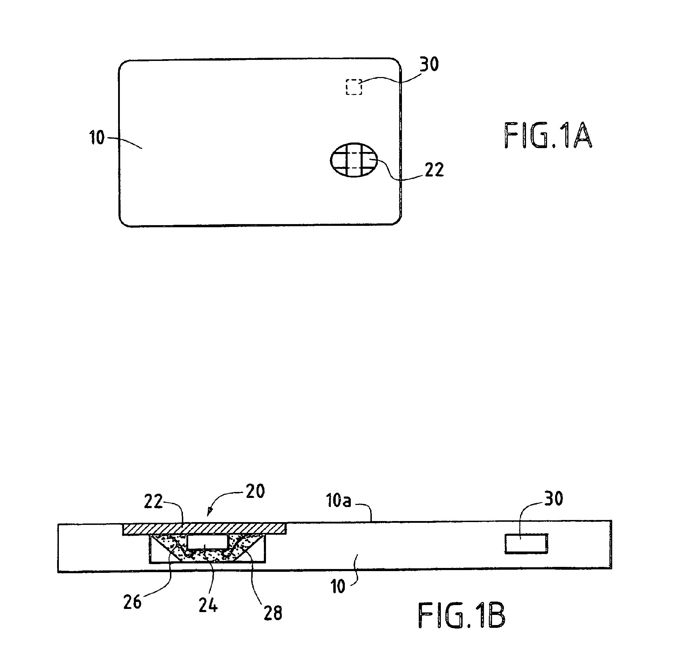

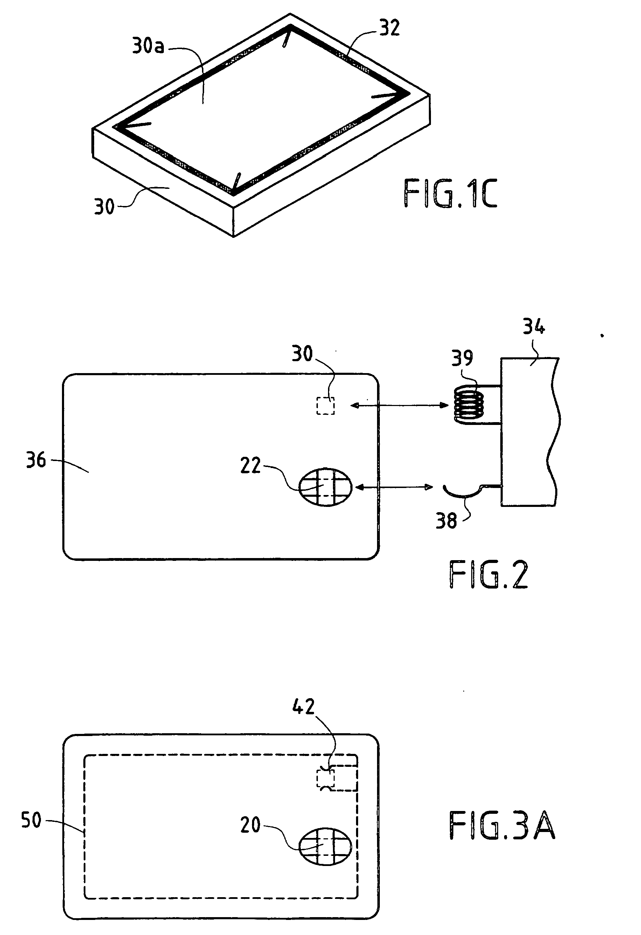

En se référant maintenant aux figures 1a à 1c, on va décrire un premier mode de réalisation de l'invention. Sur les figures 2a et 2b, on a représenté le corps 10 de la carte réalisé en matériau plastique ainsi que le module électronique standard 20 avec ses plages externes de contact électrique 22, sa pastille semi-conductrice 24, les conducteurs électriques 26 de raccordement de la pastille 24 aux plages de contact 22 et un matériau d'enrobage 28. Ce module électronique est fixé par tout moyen convenable dans le corps 10 de la carte et ses contacts externes 22 affleurent dans la face supérieure 10a du corps de carte. La carte comporte également une deuxième pastille ou puce semi-conductrice 30 qui est entièrement noyée dans le matériau plastique constituant le corps de carte 10 et dont les circuits de mémoire contiennent une information d'identification de la carte.

Selon ce mode de réalisation, pour pouvoir dialoguer avec le lecteur, la puce 30 est équipée d'une antenne de couplage électromagnétique avec le lecteur. De préférence, cette antenne est constituée par un dépôt conducteur 32 réalisé directement sur la face supérieure 30a de la pastille semi-conductrice et reliée aux bornes de celle-ci. Ce mode de réalisation permet de simplifier la réalisation de l'antenne de couplage et donc l'ensemble de la carte.

Pour permettre l'obtention d'une puce entièrement noyée dans le corps de carte celui-ci peut être fabriqué par moulage par injection, la puce et les connexions électriques formant un insert dans le moule ou par laminage à chaud de deux feuilles de matériau plastique.

La figure 2 illustre les connexions entre le lecteur 34 et la carte référencée 36. Le lecteur 34 doit comporter des contacts ohmiques du type à lame flexible 38 pour établir une connexion électrique avec les plages externes 22 de la carte 36 et d'autre part une interface de couplage électromagnétique 39 pour échanger des informations et pour assurer l'alimentation électrique de la puce semi-conductrice 30 par l'intermédiaire de son antenne 32.

Dans ce mode de réalisation, on peut avoir une identification à la fois par la puce 30 et par la pastille semi-conductrice 24 du module électronique. On pourrait également n'utiliser que la liaison électromagnétique avec la puce 30 pour assurer la fonction d'authentification du porteur.

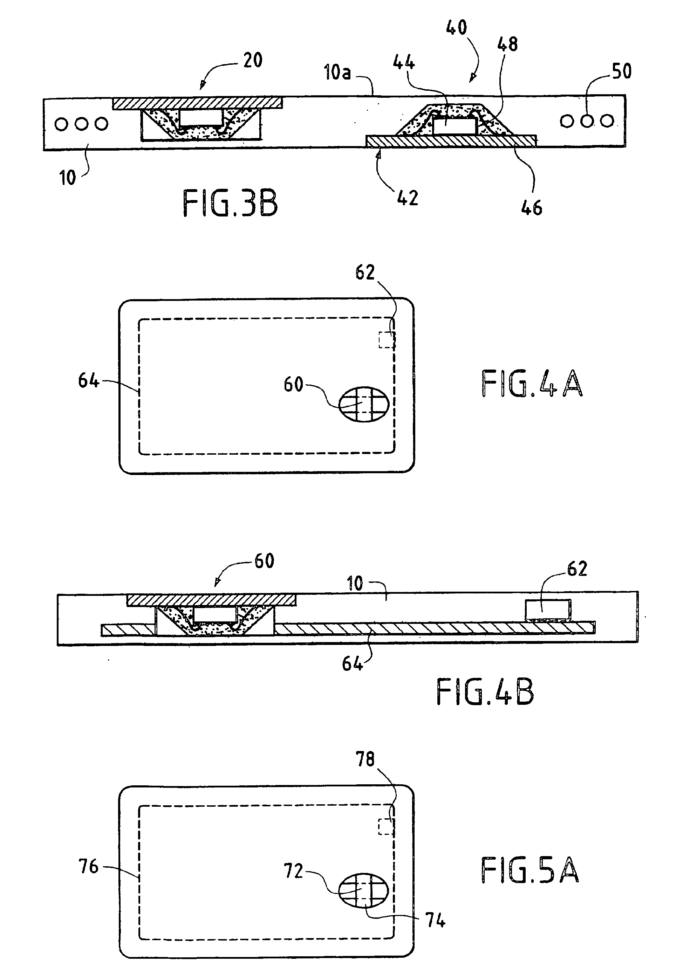

Les figures 3a et 3b illustrent un deuxième mode de réalisation de l'invention. Il se distingue de l'exemple précédent par la réalisation du composant électronique de stockage des informations d'identification et de son antenne. Comme le montre mieux la figure 3b, le deuxième composant électronique 40 est constitué par un module électronique 42 de type standard avec sa pastille semi-conductrice 44, ces plages conductrices 46 et ses connexions électriques 48. Les plages de connexion 46 sont raccordées à une antenne 50 qui est constituée par plusieurs spires conductrices noyées dans le matériau semi-conducteur constituant le corps de carte 10 comme l'est le deuxième module électronique 42.

Cette solution permet d'utiliser deux modules électroniques de type standard, le second module ayant plus spécifiquement une fonction d'authentification de la carte et, par suite, d'identification de son porteur. Cette fonction d'authentification ou, plus généralement d'identification, est rendue possible grâce à une procédure d'authentification mise en oeuvre par couplage électromagnétique entre le second module associé à son antenne et le terminal associé à son interface de couplage électromagnétique et selon laquelle le terminal envoie par exemple un défi à la carte, ce défi est reçu par le second module, le second module génère une réponse codée à ce défi en utilisant les informations d'identification contenues dans ses circuits de mémorisation et transmet cette réponse au terminal qui décode la réponse et la valide. En ce sens, les informations d'identification sont détectées par le lecteur.

Selon ce mode de réalisation, le deuxième composant électronique 40 comporte une antenne 50 qui est entièrement noyée dans le matériau constituant le corps de la carte. Si l'on peut extraire le composant électronique 40 du corps de carte, l'antenne 50 restera dans le corps de carte. Or, cette antenne est nécessaire pour que le lecteur de cartes puisse avoir accès à l'information d'identification. Le composant électronique 40 ne pourra donc être réalisé dans une autre carte.

Les figures 4a et 4b montrent un autre exemple de réalisation dans lequel on trouve un module électronique standard 60, une puce semi-conductrice 62 noyée dans le corps de carte 10 et une antenne 64 noyée dans le corps de carte et raccordée à la puce 62. On notera, relativement à cet exemple, que l'extraction du corps de la carte d'une puce noyée dans ce corps est bien plus complexe que l'extraction d'un module électronique standard.

Selon un autre exemple de mise en oeuvre du deuxième mode de réalisation, le module électronique est du type combiné, c'est-à-dire que la pastille semi-conductrice est reliée à la fois à des plages externes de contact électrique et à une antenne et la puce additionnelle est elle-même reliée à une antenne. La mise en oeuvre de la fonction d'identification peut être réalisée avec un lecteur sans contact, c'est-à-dire à couplage électromagnétique, les deux pastilles semi-conductrices pouvant être utilisées pour l'identification. Les plages externes de contact électrique peuvent être utilisées dans un lecteur ohmique lorsque la fonction d'identification n'est pas nécessaire.

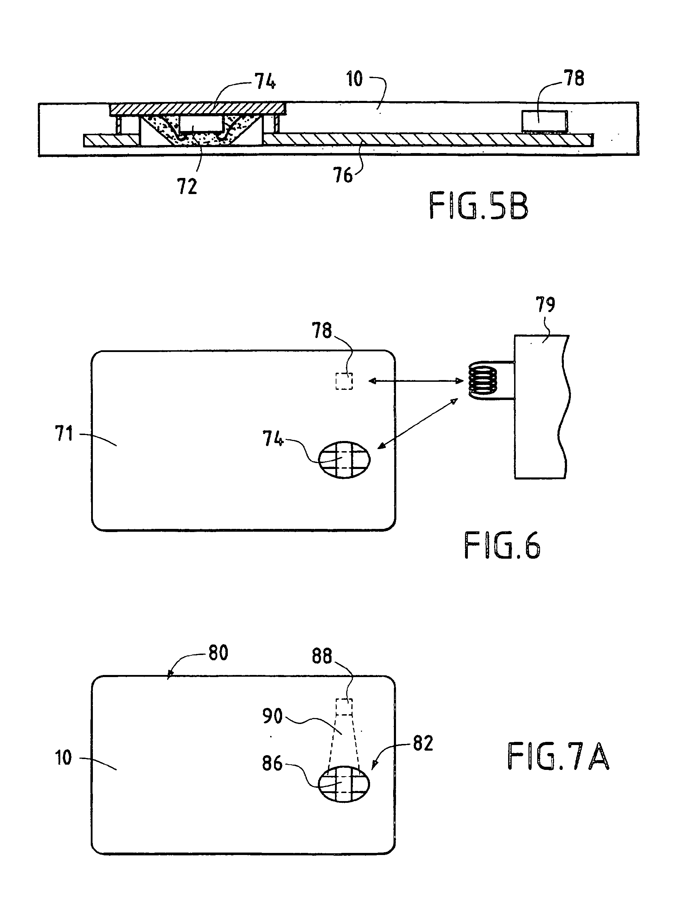

Les figures 5a et 5b illustrent un exemple de réalisation de cette variante. La carte comprend un module électronique 70 constitué par la pastille semi-conductrice 72, et les plages externes de contact électrique 74. De plus, la pastille 72 est raccordée à une antenne 76 noyée dans le corps de carte 10. La deuxième puce semi-conductrice 78 est noyée dans le corps de carte et également raccordée à l'antenne 76.

La figure 6 illustre de façon simplifiée la liaison entre la carte référencée 71 des figures 6a, 6b et le lecteur 79. Comme on l'a déjà indiqué pour la fonction d'authentification, il suffit que le lecteur soit du type électromagnétique.

On notera que, lorsque la puce et la pastille sont connectées à la même antenne, une collision est susceptible de se produire, la puce et la pastille répondant en effet de manière concomitante audit terminal. Cette collision est gérée selon des procédés connus de l'état de la technique tels que notamment décrits dans la norme ISO 14443 et de telle manière que soit la puce, soit la pastille, reste active. Il suffit alors que la puce et la pastille soient authentifiées par le terminal tour à tour pour que la carte soit considérée comme authentique. Bien entendu, compte tenu du fait que la puce et la pastille sont connectées en parallèle, les caractéristiques électromagnétiques du circuit composé de l'antenne et des deux puces sont modifiées. Aussi, de manière que le couplage inductif soit correctement assuré entre le terminal et la carte, les caractéristiques physiques de l'antenne sont avantageusement modifiées de sorte que l'impédance de ladite antenne soit divisée par deux.

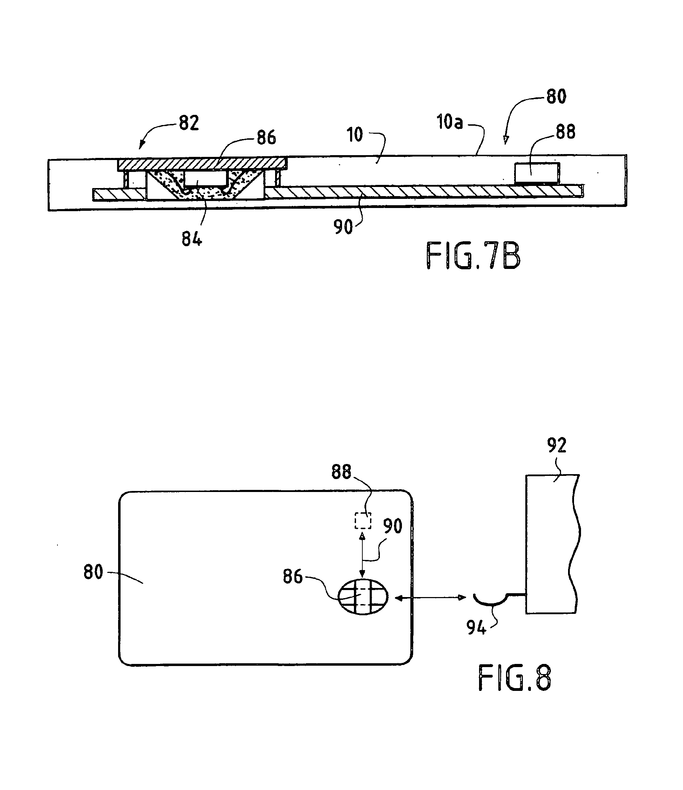

Sur les figures 7a et 7b, on a représenté un autre exemple de réalisation de la carte qui est référencée 80. La carte 80 comprend un module électronique standard 82 constitué par la pastille semi-conductrice 84 et les plages externes de contact 86. La carte comprend également une puce semi-conductrice 88 noyée dans le corps de carte et comportant les informations d'identification. La puce 88 est reliée à la pastille 84 par des conducteurs électriques 90 noyés dans le corps de carte, ces conducteurs formant des lignes de BUS d'adresse et de données pour permettre un dialogue direct entre la puce et la pastille.

Sur la figure 8, on a représenté de façon simplifiée le lecteur 92 avec lequel est utilisée la carte 80. Ce lecteur est bien sûr du type à contacts ohmiques 94 puisque la seule interface de la carte avec le lecteur est constituée par les plages externes de contact électrique 86.

Les circuits de la pastille 84 du module électronique 82 sont programmés pour que, dans la phase d'authentification, les informations d'identification stockées dans la puce 88 soient temporairement transférées dans les circuits de la puce 84 en vue d'être comparées aux informations introduites dans le lecteur 92.

En ce qui concerne les procédures d'authentification menées avec les cartes conformes à l'invention, les différents cas suivants sont susceptibles de se présenter :
- le composant électronique n'est pas connecté à une antenne. Il est alors connecté à la pastille et la procédure d'authentification est menée entre le dispositif de lecture-écriture et le composant par l'intermédiaire de la pastille, une authentification du composant par la pastille suite à une requête du dispositif de lecture-écriture suffisant cependant à authentifier la carte auprès dudit terminal, à moins que celui-ci n'exige une authentification complémentaire de ladite pastille.
- le composant électronique est connecté à une antenne et la procédure d'authentification est alors menée directement entre ledit composant et ledit dispositif de lecture-écriture, la carte étant réputée authentique si ledit composant est authentifié, à moins que le dispositif de lecture-écriture n'exige une authentification complémentaire de la pastille.

A noter que l'authentification du composant par le lecteur peut nécessiter une authentification préalable de la pastille par ledit composant et que les procédures d'authentification menées entre le composant et la pastille peuvent être mutuelles.

Selon les résultats des authentifications, les transactions menées avec la carte et grâce au lecteur sont autorisées ou non.

Il faut également ajouter que dans aucun cas les informations d'identification contenues dans le composant électronique ne sont directement accessibles par les plages de contact du module électronique.

## Revendications

1. Carte à mémoire électronique comprenant :
- un corps de carte (10) présentant deux faces principales et un module électronique comprenant des plages de contact électrique (22) et une pastille semi-conductrice (24, 72, 84) raccordée auxdites plages,
- un composant électronique (30, 40, 42, 62, 78, 88) noyé dans le matériau constituant le corps de la carte,
**caractérisée en ce que** ledit composant électronique (30, 40, 42, 62, 78, 88) contient des informations d'identification et est reliée à ladite pastille semi-conductrice

2. Carte selon la revendication 1, **caractérisée en ce que** ledit composant électronique (30, 40, 42, 62, 78, 88) est une puce semi-conductrice.

3. Carte à mémoire électronique selon l'une quelconque des revendications 1 et 2, **caractérisée en ce que** ledit composant électronique (30, 40, 42, 62, 78, 88) est relié électriquement à des moyens formant antenne (50, 64, 76) ménagés dans le corps de la carte.

4. Carte à mémoire électronique selon la revendication 3, **caractérisée en ce que** les moyens formant antenne comprennent une métallisation réalisée directement sur la face du composant électronique (78) comportant ses bornes.

5. Carte à mémoire électronique selon la revendication 4, **caractérisée en ce que** les moyens formant antenne (50, 64, 76) comprennent au moins une boucle conductrice réalisée dans le corps de la carte.

6. Carte à mémoire électronique selon la revendication 5, **caractérisée en ce que** ladite boucle conductrice formant antenne est raccordée auxdites plages externes de contact électrique (22).

7. Carte à mémoire électronique selon la revendication 1, **caractérisée en ce que** les bornes dudit composant électronique (30, 40, 42, 62, 78, 88) sont raccordées électriquement aux bornes de la pastille semi-conductrice du module électronique, et **en ce que** ladite pastille semi-conductrice comporte des moyens pour lire lesdites informations d'identification dans ledit composant électronique.

8. Carte à mémoire selon l'une quelconque des revendications 1, 5, 3 et 7, **caractérisée en ce que** ledit composant électronique comprend des moyens (32) pour permettre la détection des informations d'identification par le dispositif de lecture-écriture.

9. Carte à mémoire selon la revendication 6, **caractérisée en ce que** ladite pastille semi-conductrice du module comporte des moyens pour lire les informations d'identification dans ledit composant électronique.

10. Carte à mémoire selon l'une quelconque des revendications 1 à 8, **caractérisée en ce que** la pastille semi-conductrice du module comprend des moyens de mémorisation d'informations d'identification et des moyens pour rendre lesdites informations détectables par le dispositif de lecture-écriture.

11. Carte à mémoire selon l'une quelconque des revendications 1 à 8, **caractérisée en ce que** la pastille semi-conductrice du module électronique comprend des moyens de mémorisation d'informations d'identification et **en ce que** ledit composant électronique comprend des moyens pour détecter les informations d'identification mémorisées dans ladite pastille.

12. Carte à mémoire selon l'une quelconque des revendications 1 à 11, **caractérisée en ce que** les plages de contact (22) du module électronique affleurent dans une face principale (10a) du corps de carte.

## Claims

1. An electronic memory card comprising:
- a card body (10) with two main sides and an electronic module comprising electrical bonding pads (22) and a semiconductor chip (24, 72, 84) connected to the said pads,
- an electronic component (30, 40, 42, 62, 78, 88) embedded in the material making up the card body, **characterised in that** the said electronic component (30, 40, 42, 62, 78, 88) contains identification information and is connected to the said semiconductor chip

2. A card according to claim 1, **characterised in that** the said electronic component (30, 40, 42, 62, 78, 88) is a semiconductor chip.

3. An electronic memory card according to any of claims 1 or 2, **characterised in that** the said electronic component (30, 40, 42, 62, 78, 88) is electrically connected to means forming an antenna (50, 64, 76) provided in the body of the card.

4. An electronic memory card according to claim 3, **characterised in that** the means forming an antenna comprise metal coating applied directly on the side of the electronic component (78) comprising its terminals.

5. An electronic memory card according to claim 4, **characterised in that** the means forming an antenna (50, 64, 76) comprise at least one conductive loop made in the body of the card.

6. An electronic memory card according to claim 5, **characterised in that** the said conductive loop forming an antenna is connected to the said external electrical bonding pads (22).

7. An electronic memory card according to claim 1, **characterised in that** the terminals of the said electronic component (30, 40, 42, 62, 78, 88) are connected electrically to the terminals of the semiconductor chip of the electronic module, and **in that** the said semiconductor chip comprises means to read the said identification information in the said electronic component.

8. A memory card according to any of claims 1, 5, 3 and 7, **characterised in that** the said electronic component comprises means (32) to allow the detection of identification information by the read-write device.

9. A memory card according to claim 6, **characterised in that** the said semiconductor chip of the module comprises means to read identification information from the said electronic component.

10. A memory card according to any of claims 1 to 8, **characterised in that** the semiconductor chip of the module comprises means to save identification information and means for making the said information detectable by the read-write device.

11. A memory card according to any of claims 1 to 8, **characterised in that** the semiconductor chip of the electronic module comprises means to store identification information and **in that** the said electronic component comprises means for detecting the identification information stored in the said chip.

12. A memory card according to any of claims 1 to 11, **characterised in that** the bonding pads (22) of the electronic module are flush with one main side (10a) of the body of the card.

## Patentansprüche

1. Elektronische Speicherkarte, umfassend:
- einen Kartenkörper (10), der zwei Hauptseiten und ein elektrische Kontaktbereiche umfassendes elektronisches Modul (22), sowie ein an die genannten Bereiche angeschlossenes Halbleitsubstrat (24, 72, 84),
- eine in das Material, aus dem der Kartenkörper besteht eingebettete elektronische Komponente (30, 40, 42, 62, 78, 88), **dadurch gekennzeichnet, dass** die genannte elektronische Komponente (30, 40, 42, 62, 78, 88) Erkennungsinformationen beinhaltet und mit dem genannten Halbleitersubstrat verbunden ist.

2. Karte nach Anspruch 1, **dadurch gekennzeichnet, dass** die genannte elektronische Komponente (30, 40, 42, 62, 78, 88) ein Halbleiterchip ist.

3. Elektronische Speicherkarte nach einem der vorangehenden Ansprüche 1 und 2, **dadurch gekennzeichnet, dass** die genannte elektronische Komponente (30, 40, 42, 62, 78, 88) mit im Kartenkörper ausgebildeten, antennenförmigen Mitteln (50, 64, 76) elektrisch verbunden ist.

4. Elektronische Speicherkarte nach Anspruch 3, **dadurch gekennzeichnet, dass** die antennenförmigen Mittel eine direkt auf derjenigen Seite der elektronischen Komponente (78), die mit deren Klemmen versehen ist ausgebildete Metallisierung umfassen.

5. Elektronische Speicherkarte nach Anspruch 4, **dadurch gekennzeichnet, dass** die antennenförmigen Mittel (50, 64, 76) mindestens eine im Kartenkörper ausgebildete Leiterschleife umfassen.

6. Elektronische Speicherkarte nach Anspruch 5, **dadurch gekennzeichnet, dass** die genannte antennenförmige Leiterschleife an den genannten äußeren elektrischen Kontaktbereichen angeschlossen ist (22).

7. Elektronische Speicherkarte nach Anspruch 1, **dadurch gekennzeichnet, dass** die Klemmen der genannten elektronischen Komponente (30, 40, 42, 62, 78, 88) an die Klemmen des Halbleitersubstrats des elektronischen Moduls elektrisch angeschlossen sind, und dass das genannte Halbleitersubstrat Mittel zum Lesen der genannten Erkennungsinformationen aus der genannten elektronischen Komponente umfasst.

8. Speicherkarte nach einem der Ansprüche 1, 5, 3 und 7, **dadurch gekennzeichnet, dass** die genannte elektronische Komponente Mittel (32) umfasst, die es ermöglichen, Erkennungsinformation über die Lese-/Schreibevorrichtung zu erfassen.

9. Speicherkarte nach Anspruch 6, **dadurch gekennzeichnet, dass** das genannte Halbleitersubstrat des Moduls Mittel zum Lesen der Erkennungsinformationen aus der genannten elektronischen Komponente aufweist.

10. Speicherkarte nach einem der Ansprüche 1 bis 8, **dadurch gekennzeichnet, dass** das Halbleitersubstrat des Moduls Speichermittel für Erkennungsinformationen sowie Mittel umfasst, um die genannten Informationen durch die Lese-/Schreibevorrichtung erfassbar zu machen.

11. Speicherkarte nach einem der Ansprüche 1 bis 8, **dadurch gekennzeichnet, dass** das Halbleitersubstrat des Moduls Speichermittel für Erkennungsinformationen umfasst, und dass die genannte elektronische Komponente Mittel umfasst, um die abgespeicherten Informationen im genannten Substrat zu erfassen.

12. Speicherkarte nach einem der Ansprüche 1 bis 11, **dadurch gekennzeichnet, dass** die Kontaktbereiche (22) des elektronischen Moduls mit einer Hauptseite (10a) des Kartenkörpers bündig sind.
